# EUROPEAN PATENT APPLICATION

(11) **EP 2 071 939 A1**
(43) Date of publication of application: **24.06.2009**
(21) Application number: 08386025.4
(22) Date of filing: 20.11.2008
(51) Int. Cl.: A01G 13/02

(54) **Plastic film for agricultural use**

(30) Priority: 17.12.2007 GR 20070100761
(71) Applicant: Daios, Asterios D., 592 00 Naousa (GR)
(72) Inventor: Daios, Asterios D., 592 00 Naousa (GR)
(74) Representative: Argyriadis, Korinna

(57) **Abstract**

The present invention refers to a plastic film for agricultural use and especially for row cultivation covering like soil coverage or coverage under low tunnels. The plastic film of any length L and width B bears on both sides throughout its length L, two different types of weight insertion vaults: slow-filling (or trapping) vaults (5.1) and fast-filling (or expansion) vaults (5.2), repeated and alternating along the whole length of the film. During the use of plastic film the expansion vaults are immediately filled by the user with water or other liquid substances while trapping vaults are filled slowly with the water that will drench the plastic film and due to gravity and the film's inclination will enter them. So the plastic film is retained securely on the coverage row.

## Description

The present invention refers to a plastic film for agricultural use and especially for the coverage of linear crops such as soil coverage and coverage with low tunnels. It refers to an plastic film of any length L and width B, which on both sides throughout its length L, bears two different types of weight insertion vaults: slow-filling (or trapping) vaults and fast-filling (or expansion) vaults, repeated and alternating along the film. During the use of the plastic film, the expansion vaults are filled directly by the user with water or any other liquid substances while trapping vaults are filled slowly with the water that will drench the plastic film and that enters these trapping vaults due to gravity and the film's inclination. Thus the plastic film will be held securely on the coverage row and may also be lifted to uncover the covered plants and conduct different cultivation works.

Several proposals have been made in the past for plastic films with weight insertion vaults on their sides and throughout their length. Plastic films of this type are used in linear crops where the plants are planted along parallel lines. Each plastic film usually covers a single line and is a relatively cheap and safe solution in cases where the plastic film should not be permanently mounted on the coverage row but should be easily removed, allowing various cultivation works in the covered row. They are placed so that their central axis lengthwise is higher and their lengthwise sides are the lowest points. Most applied or proposed solutions involve plastic films with vaults that are filled with soil, while very few so far have proposed a system that fills with water.

The main reasons for the proposed plastic films using water as a weight on their sides is their ease of use and the greater ease with which they can be recycled at the end of their useful life as they do not contain a high proportion of foreign materials, particularly soil.

Of the proposed solutions for plastic films using water as a weight, most concern plastic films that, on their sides, host a water pipe generated by folding and welding the edges of the plastic film. The pipes are filled with water under pressure from the extremities of the plastic film and therefore the covered row, and as such we report GR-1001845 by the same inventor and FR-2787289.

No GR-1002872 of the same inventor presented a proposal for a plastic film featuring, along its sides, the independent water vaults filled with water through a filling pipe. It is a plastic film in which each of its lengthwise edges bears vaults and a water filling pipe created by the same plastic film.

In particular, the water vaults and each filling pipe are created by folding the edges of the plastic film and welding each film with the underlying section of the plastic film in such a way that:
a) each filling pipe extends along the whole length of the plastic film, is underlying with respect to the water vaults and feeds each of them with water through a small opening.
b) the repeated water vaults are formed between the filling pipe and the crease of each folding. Each repeated water vault only communicates with the filling pipe through the feeding opening.

According to this proposal, the filling of the water vaults only takes place with water under pressure.

In particular, at the end of each coverage row, both extremities of the plastic film, where the corresponding filling pipes end, are fitted with pressurised water supply outlets. The pressurised water passes through each filling pipe and fills simultaneously all the underlying water vaults through the corresponding openings for the supply of water. At the end of the procedure, all the water vaults as well as the water pipes are full of water. During the use of the plastic film, part of the water from the filling pipe may empty.

This system allows for the safe use of the plastic film, as it has independent water vaults, but it has three weak features:
a) The filling pipe must necessarily be protected as, if it is punctured, it may not be reused to fill the vaults, rendering the plastic film useless.
b) Requires the supply of water under pressure, which is not possible in all fields.
c) Because of the need for tightness of the vaults, the plastic film can be used in one certain direction. Thus, the vaults should not be pressed in a direction opposite to the filling opening, as they risk bursting rendering the plastic film useless. In practise though, both during the everyday use of the plastic film and its gathering at the end of the cultivating period, the vaults are pressed violently towards all directions and are thus destroyed.

To solve these problems, the present invention moves in a different direction, proposing a plastic film where water-trapping vaults are built in such a way that:
a) they are filled locally, each one independently and not from the main filling or feeding pipe.
b) they are filled freely, with gravity, from the water falling on the plastic film spread out on the field, that will be guided due to gravity and inclination of the plastic film, and will enter and be captured within them. That means that no water under pressure will be required.
c) they are protected from bursting. Each vault will bear openings at its extremes and will communicate with both its previous and next one as well as with the surroundings. They will thus present no danger of bursting during their use due to static or dynamic external pressure.
d) they retain the contained water when no external pressure applied. Although it will bear openings due to its construction and geometric shape, the vault will retain the water that will have flowed into it and will maintain its quantity at a stable level so that the plastic film will be neither heavy nor too light. The hydrostatic pressure created by the contained water in each trapping vault will block the openings to ensure a constant amount of water in the vault and will not empty easily of the contained water, no matter what the inclination of the plastic film under use at normal pressure.
e) they are easily emptied from the contained water if additional external (static or dynamic) pressure is applied. The trapping vault openings blocked due to the internal hydrostatic pressure will open upon the application of any additional external pressure and the water will flow from one compartment to the next and to the surroundings and even at a speed proportional to the amount of the applied pressure, an operation that will be comprehensively explained below. Their protection from bursting due to pressure will be thus ensured. This is very important at the collection process of the plastic film at the end of the cultivating season, when excessive pressure is developing inside the plastic film vaults when wrapped in roll.
f) In the most recommended way to realize the invention, expansion vaults will be inserted between the water trapping vaults, alternating each other along the whole length of the plastic film either one after another or periodically thus creating at each plastic film side:
   - fast-filling (expansion) vaults, which will be filled with water immediately, ensuring the retaining of the plastic film during its installation, which will also be easily emptied and thereby discharge any external pressure.
   - and slow-filling (trapping) vaults, which will trap the water ensuring the retaining of the plastic film throughout its use.

Below follows an invention description with reference to the following figures:
- Figure 1: view of the plastic film for agricultural use (1) and water trapping vault detail (5.1).
- Figure 2: view of the plastic film for agricultural use (1) according to a second construction way and water vault detail (5.1).
- Figure 3: view of the plastic film for agricultural use (1) according to a third construction way and water vault detail (5.1).
- Figure 4: various water vault designs (a, b, c, d)
- Figure 5: various water vault designs (a, b, c, d).

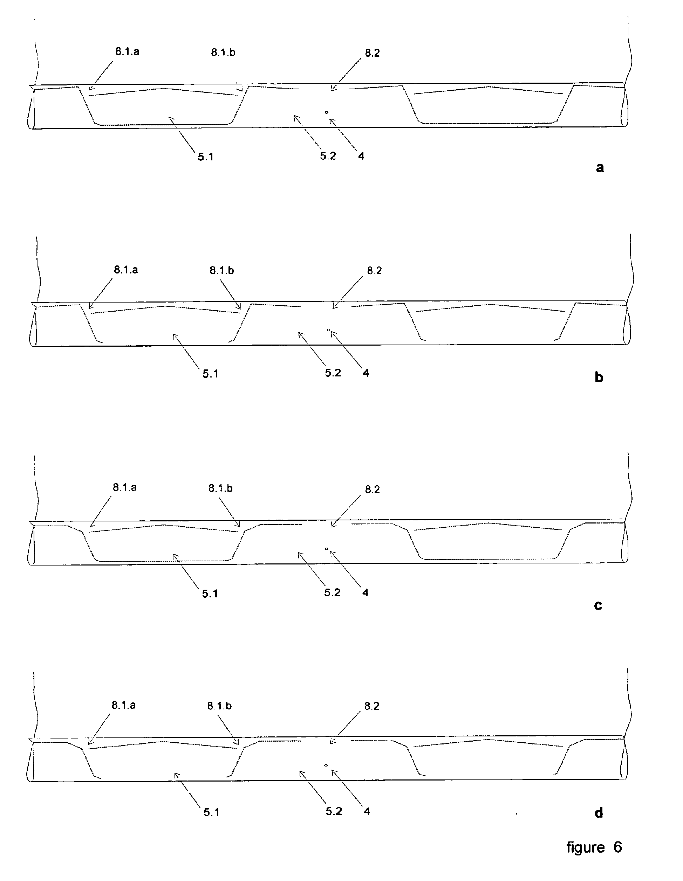

- Figure 6: various water vault designs (a, b, c, d).
- Figure 7: illustration of water vault openings blocking under the action of internal hydrostatic pressure (P) at various plastic film inclinations.

Below follows a description of an invention materialization method:

On a plastic film (1) of any colour and dimension with B +2b width and L length, that is produced by one of the known methods of plastic film production, its both edges (2) are each folded along its whole length and width (b). In this way the "width phenomenon" of the film ("layflat" in plastic film terminology) is equal to B.

Each folded width b section is welded to the underlying plastic film (1) with repeated complex heat welding along the plastic film by any of the known plastic film heat-sealing methods.

The shape of complex heat-sealing has such form that successive vaults are created along the folded section, that as to be explained below are of two types, water trapping vaults (5.1) and expansion vaults (5.2).

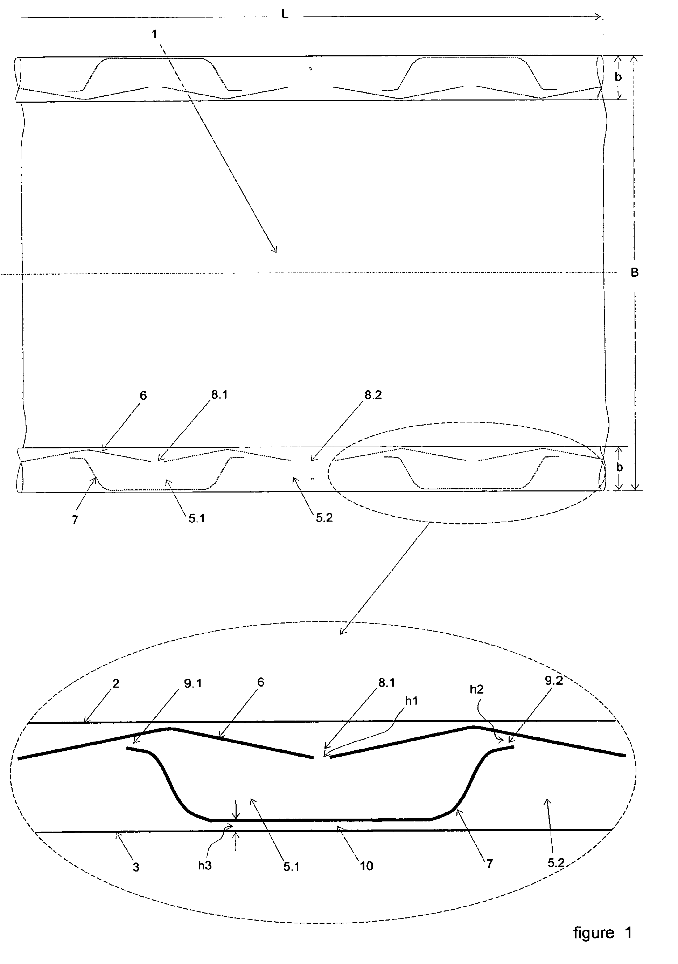

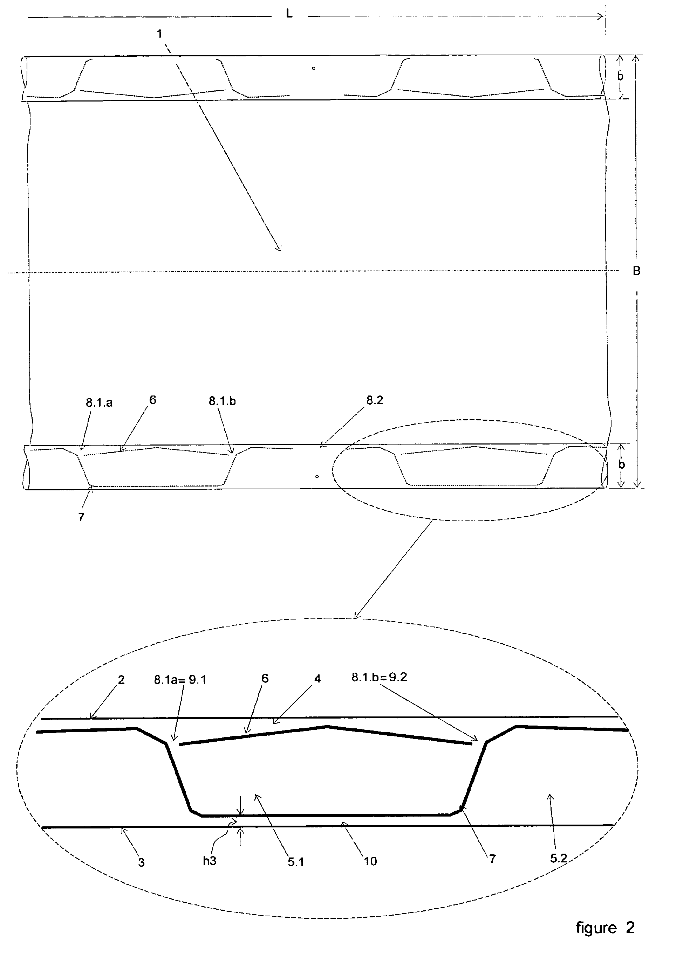

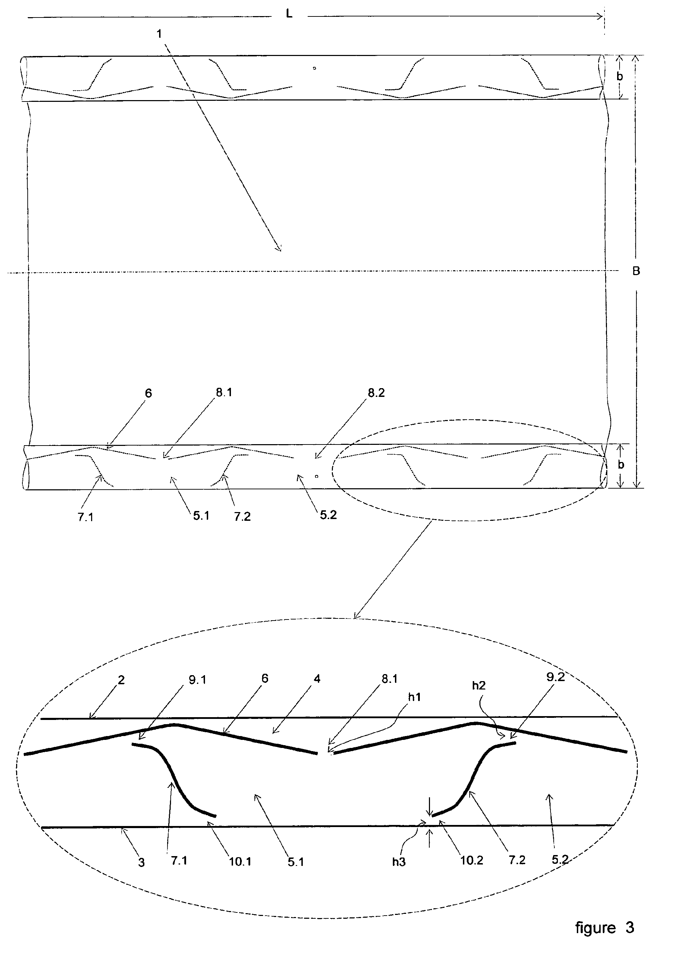

Each complex heat-sealing is comprised of the following sections:
1. The upper section (6), which creates a substandard gutter with the folding edge (2) and the underlying plastic film, that stops the water (which falls on the plastic film and flows towards its edges) and leads it to enter the corresponding underlying vault (5.1 - 5.2). The upper part could be parallel to the length of the plastic film or have an inclination or a bilateral inclination and be symmetrical to a transverse axis or even asymmetrical. It is preferred to have a slight inclination and to be symmetrical - as shown in Figures 1, 2, 3 -.
2. The lower section (7), which - preferably - has a curved shape and in this version looks like a collection basin whose bottom is at a small h₃ < 30 mm distance from the plastic film crease (3). The upper rim of the basin has preferably a curved extremity. Each extremity must be at a distance of h₂ < 30 mm from the nearest point of the corresponding upper heat-sealing section and preferably about 10 mm. This distance is the water expansion opening (9.1, 9.2) of the trapping vault (5.1) either towards the expansion vault (5.2) (Figures 1 & 3) or towards the plastic film centre and from there to the surroundings (Figure 2). Also preferably each lower section extremity (7) converges with the corresponding upper heat-sealing section (6) (their extensions intersect at an angle <90°) and this is a very important function because it ensures the blocking of the expansion opening (9.1 or 9.2) when the vault is filled with water and the opening suffers hydrostatic pressure, so that the water may not leak.

The upper (6) and lower heat-sealing section (7) may be centred upon each other (Figure 2) so that their combination may remind a basin cap (upper section), embedded in the basin (lower section) or displaced in such a way so that each upper section may be centred almost above each lower heat-sealing section extremity (Figures 1 and 3). It may also have any other position regarding the lower heat-sealing section, insofar as the presence of openings in each vault ensures communication with the surroundings and the vaults on the other side.

By repeating this complex thermal welding along each plastic film folding, successive water vaults of two types are created:
1. The water trapping vaults (5.1) - or slow-filling vaults - which lies between the lower basin section (7) and the upper section (Figure 2) or upper sections (6) of the thermal welding (Figures 1 and 3).
2. The expansion vaults (5.2) - or fast-filling vaults - are inserted between two water trapping vaults (5.1).

Water may enter inside the water trapping vaults (5.1) due to gravity through one (Figures 1 and 3) or two (Figure 2) openings (8.1) or through more having an opening of h₁ < 50 mm and preferably 20-30 mm. Also in the case of Figures 1 and 3 each trapping vault may communicate with the previous or next expansion vault with an expansion opening (9.1 & 9.2) of h2 <30 mm and preferably about 10 mm, located on the upper section and formed between the lower heat-sealing (7) and upper heat-sealing extremities (6).

In the case of figure 2, the entry openings (8.1 - 8.2) may also at the same time be expansion openings (9.1 - 9.2).

During the use, as the water enters from the openings 8.1, due to hydrostatic pressure, the trapping vault is inflated (5.1) and the openings are distorted and blocked, an operation that will be better explained below.

Water or other liquid material may enter the expansion vaults (5.2) from the entry openings (8.2) which are usually bigger (preferably 20 - 200 mm) than trapping vault entry openings and communicate - according to figures 1,2,3 - with the preceding and following expansion vault (5.2) passing beneath the trapping vault (5.1) through the expansion opening (10) having an h3 <30 mm width. Also inside the expansion vault space (5.2) there may be one or more small holes (4) at a certain distance from the crease (3). So the expansion vaults may also operate as balancing vaults.

### Water inside trappin vaults (5.1) may come out only upon the application of additional external static or dynamic pressure.

### Water inside expansion vaults (5.2) may additionally come out depending on the plastic film inclination either from the entry opening (8.2) or through the hole (4), even without the application of external pressure.

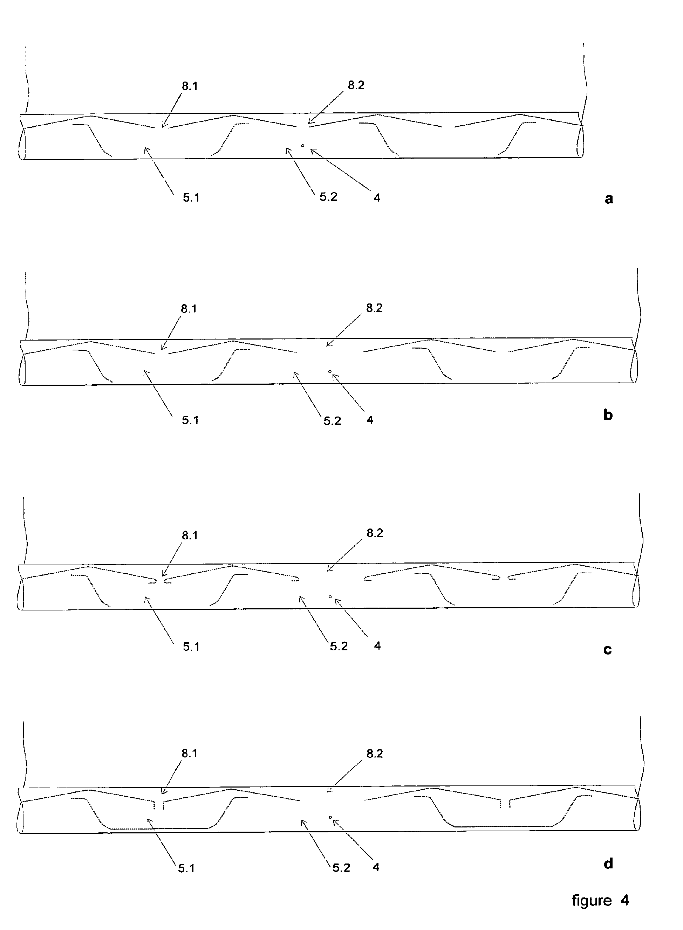

Each vault opening communication with the next vault or with the surroundings have no random shape or orientation. Therefore:
- The most extreme point of each vault must coincide - at the direction of its length - with one of the openings (9.1-9.2-10) and communicate with the next or previous vault or with the surroundings. This is the only way to ensure the prevention of the vault from bursting when external static or dynamic pressure is applied on it. When external static or dynamic pressure applied on the vault, compressed water will be pushed to the most extreme point along the vault's length, where one of its openings is located and will open it in order for all of it to flow out and so secure the vault from a potential bursting. This will also with the next vault and so on.
- The openings should be created by converging sealings (straight or curved). Such are two consecutive upper sealings (6) between them that create a blocking at the opening (8.1) or one upper sealing (6) and the lower sealing extremity (7), which block the opening (9.1 or 9.2). The converging sealing extremities may curve at their ends, if this helps at the best possible blocking of the opening (8.1) (Figures 4c - 4d). As the vault fills with water, it inflates and so the opening will close at the converging sealings' imaginary extension, reducing that way the active opening until it closes completely. So the opening will become a sort of valve operating this way while the pressure applied to it is the hydrostatic pressure of the contained water inside the vault. When an external pressure is applied, then the water will increase the pressure towards the opening, the imaginary blocking straight line will change, the opening will open and water will flow from one vault to another.

Because of the different size of water entry openings at the trapping and expansion vaults during the spread-out of the plastic film, the expansion vaults (5.2) are filled immediately with water or any other liquid material and hold the plastic film directly on the cultivation line until the water trapping vaults, consisting the long-term weight of the plastic film, are also filled later on (5.1). Additionally the expansion vaults (5.2) discharge the water more easily to the environment, without any need for external pressure.

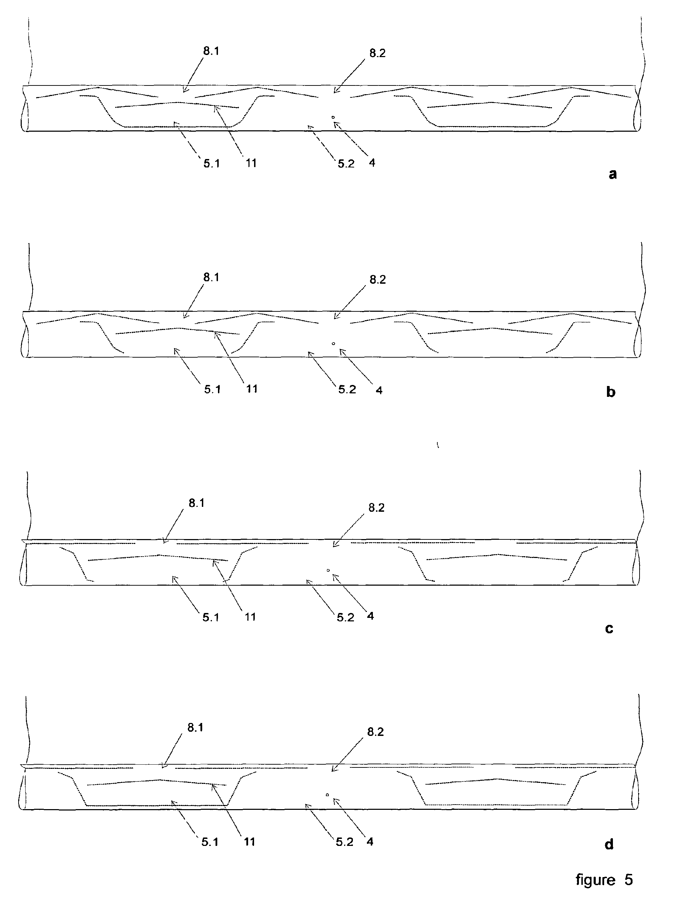

Figure 5 shows a special solution that could be created if all water entry openings (8.1) of the water trapping vaults (5.1) are made bigger and the obstruction of water exiting was obtained through an internal sealing (11), linear or curved, along the plastic film or preferably with a bilateral inclination towards the crease (3), and inside the water trapping vault.

Then the water trapping vault would be constrained between the internal sealing (11) and lower sealing (7) - Figure 5a, 5d - or the side sections (7.1-7.2) - figure 5b, 5c -. The openings created between the internal sealing (11) and lower sealing (7) or the side sealings (7.1-7.2) will be water entry openings at the constrained trapping vault (5.1.b) and at the same time expansion openings just like with Figure 2 solution. In this case, the water trapping vault antechamber (5.1.a) would be filled quickly due to a bigger opening (8.1) and then itself in its turn would fill the constrained trapping vault at a slower rate (5.1.b).

The water entry opening (8.1 and 8.2) could be equally small and even smaller than 50 mm in all types of vaults and then the expansion role at the expansion vault will played solely by the expansion hole (4) (Figure 4a).

Figure 2 as well as figures (4a, 4b, 4c, 5b, 5c, 6b, 6d) present modified solutions to the above-mentioned proposals, where trapping vaults (5.1) are even more open (non-impermeable) with more expansion openings but without risking water trapping. This could be created if the lower basin-type sealing (7) lacked its bottom.

Then essentially the lower basin-type sealing would be comprised solely by its two side sections (7.1-7.2) that would have an inclined "S" shape, linear or curved.

According to this proposal each trapping vault (5.1) communicates with the expansion vaults (5.2) from its bottom as well through two additional openings (10.1 & 10.2) located on the lower part of the vault at the crease (3). The trapping vault is confined between the upper sealing parts (6) of the side sealings (7.1-7.2) and the crease and therefore the crease is considered its bottom.

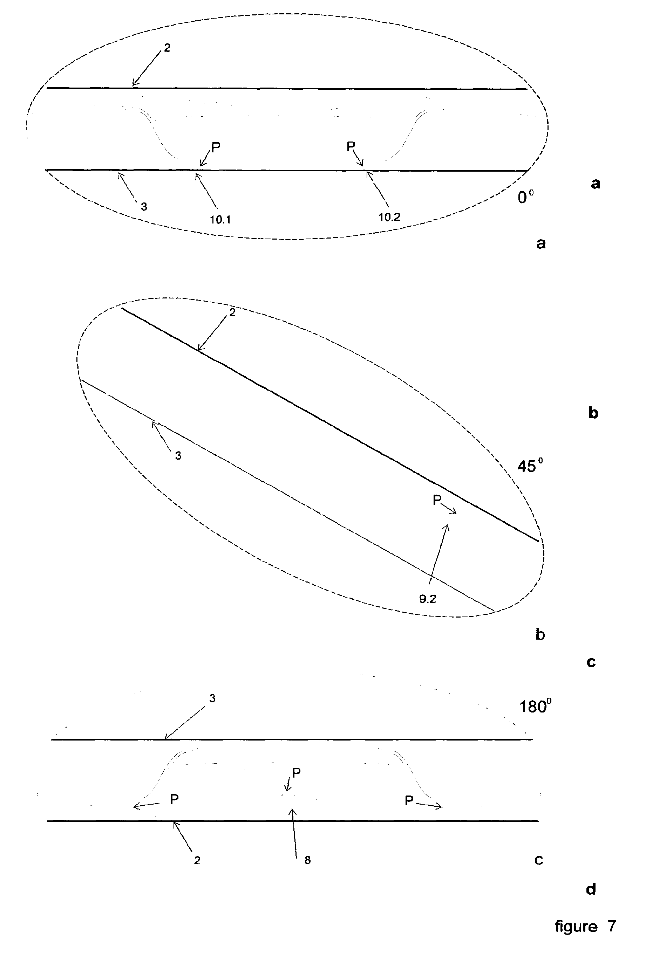

And what applies in this case is that the upper and lower extremity of the side S-type sealing should converge towards the upper part of the heat-sealing as far as the first one is concerned and towards the crease as far as the second one is concerned. So when the vault is filled with water, the internal hydrostatic pressure (**P**) will distort it and will close the openings (9.1, 9.2 and 10.1, 10.2) suffering this pressure (depending on the plastic film inclination), as shown in figure 7, and so there will be no water flow either outwards or from one vault to another.

The S-type sealings could be prograde and not counterbalance and only in this case and since all water entry openings are the same, all the vaults will have the same shape but not the same function, because some vaults could operate as expansion vaults, if an expansion hole (4) is created inside their space.

In all these solutions a trapping vault (5.1) interchanges with an expansion vault (5.2) in length and so on.

It is clear that the expansion vaults could be fewer than trapping vaults and come in periodically between consecutive trapping vaults (e.g. two successive trapping vaults - one expansion vault, or three successive trapping vaults - one expansion vault, and so on) or follow a random distribution at their succession along the plastic film.

It is clear that there could be many schemes covering the main idea of this proposal, i.e. plastic films with alternating weight vaults along its sides that will be of two types:
a) water trapping vaults that will fill with water though natural flow and will trap it under the influence of contained water hydrostatic pressure content while discharging it if additional external pressure is applied,
b) expansion vaults that will fill with water though natural flow or other liquid material and will serve as expansion area not only should external pressure applies but also under normal conditions
and these two types of vaults will interchange with one another, one by one, with a certain periodicity or also randomly along each side of the plastic film for agricultural use.

The use of such a plastic film offers many advantages to the grower using it.

The plastic film spreads out on the coverage row either in tunnel form or on top of an earthen elevated row so that its length sides may be its lowest points.

When the user spreads it out on the field, he may drench it with water or take advantage of rain water that will stop on the upper sealings (6), after running due to gravity (because of the plastic film's inclination) to the plastic film side edges where the water vaults are, and from there will fill through the openings (8.1 - 8.2) the water vaults (5.1 and 5.2).

The expansion vaults (5.2) that have the largest openings will be filled immediately and will retain directly the plastic film preserving it so that it may not get carried away by potential wind.

The trapping vaults (5.1) will be filled with water much more slowly and possibly with additional plastic film wetting -either through rain or artificially- but they will be the ones to trap the water with which they will be filled.

During the use of the plastic film, the expansion vaults (5.2) will empty very easily but will also be filled again as easily each time it rains.

The trapping vaults (5.1) will retain the water, with which they were filled while possible small losses will be supplemented with each rainfall.

If the grower doesn't have any water available during the plastic film spread out, due to the large expansion vault opening (5.2), he could insert in some of them sporadically any other diffluent weight like soil to enable the plastic film to be temporarily retained coverage on the row until the first rain (natural or artificial) fills the trapping vaults (5.1) and thus be retained in a more correct manner on the coverage row.

At the end of the cultivating season the user may roll the plastic film on a coil. The pressure applied during the plastic film folding on the vaults located right before the folding will open the expansion openings and the water will escape from each trapping vault:
a) to the surroundings - through the entry openings (8.1).
b) to the next expansion vault (5.2) through the openings (9.1-9.2 and 10.1-10.2) and from there into the environment through the opening (8.2) or the hole (4)

In this way the plastic film without water in its vaults and without any of them destroyed by pressure will be rolled in order to be reused next year.

At the end of the plastic film's life expectancy, the user may gather it with a very small content in soil and water and so this plastic may be recycled more easily, not usually happening with plastic films containing soil as burden.

## Claims

1. Plastic film for agricultural use of any colour, length L and width B, whose two edges at length are folded at a width b and welded with the underlying part of the plastic film to create successive non-impermeable vaults, which receive water during their use as weight, and which vaults are **characterized by** the fact that they are of two different types:
a) trapping vaults (5.1) of water that have at least one entry opening (8.1) from which they fill with naturally flowing water and at least two expansion openings (9.1-9.2), which have the capacity to block under the influence of contained water hydrostatic pressure trapping this way the water inside the vault and to open under the influence of additional external pressure on the vault,
b) expansion vaults (5.2), which have at least one entry opening (8.2) from which they fill with naturally flowing water or with another liquid substance and at least two expansion openings (9.1-9.2) or at least one expansion hole (4) and will serve as expansion area of the contained water or under the influence of hydrostatic pressure or any additional external pressure,
and that these two types of vaults will interchange with one another with a certain periodicity (usually one by one) or also randomly along each plastic film side (1).

2. Plastic film for agricultural use, according to claim 1, **characterized by** the fact that the expansion (5.1) and trapping (5.2) vaults are created by repeated along the plastic film's length heat-sealings comprised by two independent parts (the upper part (6), which is linear or curved, along the plastic film and preferably with bilateral inclination towards the crease (3) and the lower basin-formed part (7)), which converge with each other at a distance h2 < 30 mm and preferably about 10 mm in order to create the expansion openings (9.1 - 9.2) (details of Figures 1,2,3).

3. Plastic film for agricultural use, according to claims 1 and 2, **characterized by** the fact that the entry openings (8.1) of water inside the trapping vaults (5.1) are less than 50 mm and preferably 20-30 mm while the entry openings (8.2) at the expansion vaults (5.2) are between 20 and 200 mm.

4. Plastic film for agricultural use, according to claims 1, 2, 3, **characterized by** the fact that the lower sealing basin-formed part (7) has a (h3 <30 mm) distance from the crease (3) of the plastic film and is covered by two consecutive upper sections (6) so that the entry opening (8.1) may be created between the nearest upper section extremities and preferably be centred with the lower sealing axis (Figure 1).

5. Plastic film for agricultural use, according to claims 1,2,3, **characterized by** the fact that the upper section (6) sealing is located inside the lower sealing basin-formed part (7) and is preferably centred with it and where the water entry openings (8.1 - 8.2) and expansion openings (9.1-9.2) coincide (Figure 2).

6. Plastic film for agricultural use, according to claims 1 and 2 and any of 4-5, **characterized by** the fact that the water entry opening in all vaults is between 50 mm and 200 mm and preferably 130 mm and which inside the water trapping vault (5.1) bears an additional internal sealing (11) linear or curved, along the plastic film and preferably with bilateral inclination towards the crease (3), which separates the trapping vault in an antechamber (5.1.a) and a limited water trapping vault (5.1.b) (Figure 5).

7. Plastic film for agricultural use according to claims 1 and 2 and one of 4 to 6, **characterized by** the fact that the lower basin-formed sealing consists of two independent linear or curved sections placed transversely to the plastic film length and have preferably and open "S" shape (7.1 and 7.2) - counterbalancing or progade - whose upper extremities preferably converge towards one upper section (6) (Figure 6b, 6d) or two consecutive upper sections (6) (Figure 3) at a h2 < 30 mm distance and preferably about 10 mm, while the lower extremities converge to the crease (3) at a h3 < 30 mm distance and preferably 10 mm from it.

8. Plastic film for agricultural use according to claims from 1 to 7, **characterized by** the fact that the upper section (6) or the lower section (7) extremities of the sealings may have any curved form so as to ensure the blocking of the respective entry or expansion openings (8.1-8.2 or 9.1-9.2 or 10.1-10.2) (Figure 4c, 4d).
